(19) Europäisches Patentamt
European Patent Office
Office européen des brevets

(11) Publication number: 0 451 768 A2

# (12) EUROPEAN PATENT APPLICATION

(21) Application number: 91105558.0

(51) Int. Cl.5: G11B 5/72

(22) Date of filing: 09.04.91

(30) Priority: 10.04.90 JP 93182/90

(43) Date of publication of application:
16.10.91 Bulletin 91/42

(84) Designated Contracting States:
DE FR GB

(71) Applicant: FUJI PHOTO FILM CO., LTD.
210 Nakanuma Minami Ashigara-shi
Kanagawa(JP)

Applicant: MARUWA BUSSAN K.K.
No. 7-19, 2-chome, Kyobashi
Chuo-ku Tokyo(JP)

(72) Inventor: Nishikawa, Yasuo
12-1, Ogi-cho 2-chome
Odawara-shi, Kanagawa(JP)
Inventor: Meguro, Katsuhiko
12-1, Ogi-cho 2-chome
Odawara-shi, Kanagawa(JP)
Inventor: Dekura, Takateru
1-3, Sasame-cho
Kamakura-shi, Kanagawa(JP)

(74) Representative: Patentanwälte Dr. Solf & Zapf
Zeppelinstrasse 53
W-8000 München 80(DE)

## (54) Magnetic tape.

(57) A metal thin film-type magnetic tape comprising a non-magnetic support and a ferromagnetic metal thin film provided on the support, wherein the ferromagnetic metal thin film carries thereon a fluorine-containing polyamide compound represented by formula (I):

$Q\{NHCO\text{-}R)_n$

wherein Q is an n-valent organic radical, R is a monovalent group containing a fluorine atom and an ether bond, and n is an integer of at least 2 or more.

EP 0 451 768 A2

## FIELD OF THE INVENTION

The present invention relates to a magnetic tape having a vacuum-deposited ferromagnetic metal thin film as a magnetic recording layer. More specifically, the present invention relates to a metal thin film-type magnetic tape exhibiting excellent running properties and abrasion resistance over a wide range of temperature and humidity conditions.

## BACKGROUND OF THE INVENTION

Heretofore, a coating-type magnetic tape prepared by coating a non-magnetic support with a coating composition comprising a ferromagnetic powder dispersed in an organic polymer binder has been widely used. In recent years, with an increased demand for high density recording, a metal thin film-type magnetic tape has been introduced for use as the magnetic recording layer in which a ferromagnetic thin film formed by a vapor deposition method, such as vacuum deposition, sputtering or ion plating, or a plating method such as electric plating or electroless plating, and in which no binder is used.

In particular, the vacuum deposition method has a great advantage in that waste treatment required in the plating method is not needed, and also the process of production is straight-forward, and additionally the rate of deposition of film can be adjusted in a highly-controlled manner. As an example of a suitable vacuum deposition method for production of a magnetic film having cohesive force and square properties desirable for a magnetic tape an oblique vacuum deposition method as described in, for example, U.S. Patents 3,342,632 and 3,342,633 is known.

However, important problems associated with the magnetic tape having a ferromagnetic thin film are durability, running properties and abrasion resistance. During recording, reproduction and erasing of a magnetic signal, the magnetic tape is put in high speed motion relative with a magnetic head. At this time, running should be carried out smoothly and also in a stabilized manner, and at the same time, abrasive contact with the magnetic head should be avoided. In response to these circumstances and in order to improve running properties and durability, it has been proposed to provide a lubricant layer or a protective layer on the metal thin film.

As the protective layer for metal thin film-type magnetic recording, a layer formed by coating a solution prepared by dissolving a thermoplastic resin, a thermosetting resin, fatty acid, a fatty acid metal salt, fatty acid ester or alkylphosphoric acid ester, for example, in an organic solvent is known as described in, for example, JP-A-60-69824 and JP-A-60-85427 (the term "JP-A" as used herein means an "unexamined published Japanese patent application").

Recently a method of improving durability by using a compound having a branched perfluoroalkenyl group has been developed as described in JP-A-61-107528.

A perfluoroalkylenepolyether-based compound (oligomer, homopolymer or copolymer having a repeating unit of $C_nF_{2n}O$), or partially fluorinated alkylenepolyether is now under extensive investigation. U.S. Patent 3,778,308 discloses providing a perfluoropolyether on a magnetic layer. JP-B-60-10368 describes usefulness of terminal-modified perfluoropolyether (the term "JP-B" as used herein means an "examined Japanese patent publication").

Test results of a fluorine-containing polyamide compound which has the molecular structure of a compound, as in the present invention as used as a lubricant for a disk medium having a carbon protective layer are reported in Sugiyama et al., Preprint of 34th Japanese Lubricant Association B•28, page 425 (1990). This report, however, fails to suggest applicability of the above compound to a magnetic tape, because the thickness of the lubricant layer is at most 3.5 nm, so that the thickness region is relatively small for application to magnetic tape, and no data concerning still durability characteristic of a video tape is disclosed. Moreover the protective layer described in this report is provided through a 20 nm-thick carbon protective layer. and, therefore, this system is different from a magnetic tape in which a carbon protective layer is difficult to provide from a viewpoint of spacing loss.

U.S. Patent 4,897,211 discloses a magnetic disc having a magnetic layer covered with a carbon protective layer on which a compound having an atomic group including a benzene ring in the center portion of molecule and having two perfluoropolyether groups bonded to the atomic group is further coated to form a lubricant layer. According to the U.S. Patent, sufficient weatherability is realized with the carbon protective layer formed on the magnetic layer and thus the lubricant layer is given no concern in improvement of weatherability and is not so designed.

In magnetic tapes having a metal thin film as a magnetic layer, however, it is not suitable to provide such a carbon protective layer in view of spacing loss, and the improvement in weatherability of the metal thin film is of great importance. Since the spacing loss results in reduced output, metal thin film-type

magnetic tapes for high density recording are so requested that overcoat layers such as a lubricant layer and a protective layer provided on the surface of the magnetic layer are as thin as possible, yet being capable of imparting weatherability to the magnetic layer. In particular, metal thin films are easily corroded under high temperature and high humidity conditions. Thus, metal thin film-type magnetic tapes having improved weatherability as well as running durability have been highly desired.

Further, metal thin film-type magnetic tapes obtained by prior art methods are not satisfactory in running properties and abrasion resistance under severe conditions of e.g., low temperature and high humidity, and furthermore they suffer from other problems, such as deterioration of electromagnetic characteristics due to the spacing loss between a head and a tape which is caused by provision of a protective or lubricant layer. Thus, a need still exists to further improve metal thin film-type magnetic tapes in practical use.

## SUMMARY OF THE INVENTION

An object of the present invention is to provide a metal thin film-type magnetic tape excellent in running properties, abrasion resistance and electromagnetic characteristics.

The present inventors have discovered that high durability and low friction metal thin film-type magnetic tapes, which have been unable to be realized heretofore, can be obtained by providing a fluorine-containing polyamide compound on a metal thin film-type magnetic layer provided on a non-magnetic support.

The present invention relates to a metal thin film-type magnetic tape comprising a non-magnetic support and a ferromagnetic metal thin film provided on the support, wherein a fluorine-containing polyamide compound represented by formula (I) shown below is provided on the ferromagnetic metal thin film:

$Q\text{-}(NHCO\text{-}R)_n$ (I)

wherein Q represents an n-valent organic radical, R represents a monovalent group having a fluorine (F) atom and an ether bond, and n represents an integer of 2 or more.

## BRIEF DESCRIPTION OF THE DRAWINGS

The figure is a schematic view of a system for measurement of a coefficient of friction of a magnetic tape surface.

## DETAILED DESCRIPTION OF THE INVENTION

In the above general formula (I), R is preferably a group represented by the following general formula (II):

$\text{-}Y\text{-}(OZ)_m\text{-}X$ (II)

wherein X represents F, $CF_3$, $C_2F_5$, $C_3F_7$, $OCF_3$, $OC_2F_5$, $OC_3H_7$ or a group resulting from full or partial replacement of the fluorine atoms in any of the above-listed groups by H or Cl.

Y represents $CF_2$, $C_2F_4$, $C_3F_6$ or a group resulting from full or partial replacement of the fluorine atoms in $CF_2$, $C_2F_4$ or $C_3F_6$ by H or Cl.

Z represents $C_3F_6$, or a group resulting from partial replacement of the fluorine atoms in $C_3F_6$ by H or Cl, and

m represents an integer of 3 to 30.

The group for R preferably has 6 or more fluorine atoms.

The aforementioned fluorine-containing polyamide compound refers to a compound obtained by acylating a polyamine compound, such as triaminotriazine, ethylenediamine, 4,4'-sulfonyldianiline (dianilinosulfone), hexamethylenediamine or aminoaniline, with a carboxylic acid compound having a fluorine-containing alkylenepolyether chain, such as a fluorinated carboxylic acid substituted by a fluorinated polyether chain.

The fluorinated polyether can be a perfluorooxy-n-propylene polymer chain, a perfluorooxyisopropylene polymer chain, and those chains resulting from replacement, fully or partially, with hydrogen or chlorine for the fluorine atom(s) in these polymer chains.

More preferred examples of the fluorine-containing polyamide compound are those represented by

formulae (A), (B), (C) or (D) shown below, and compounds resulting from partial replacement of fluorine atoms therein with H or Cl.

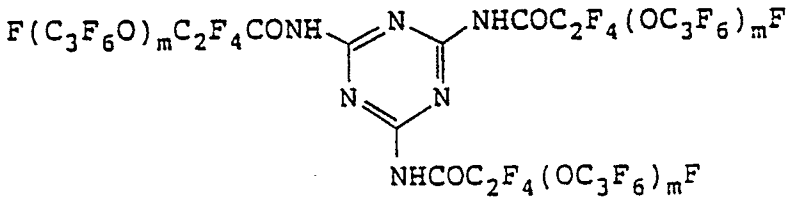

(A)

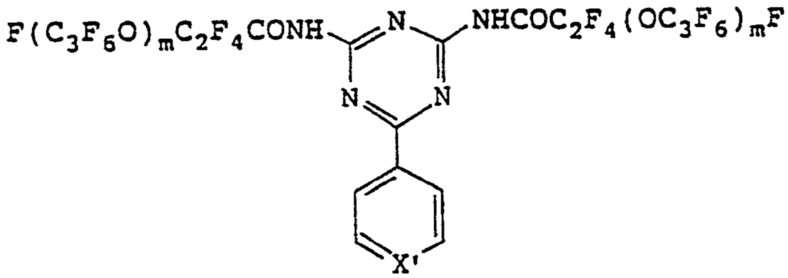

(B)

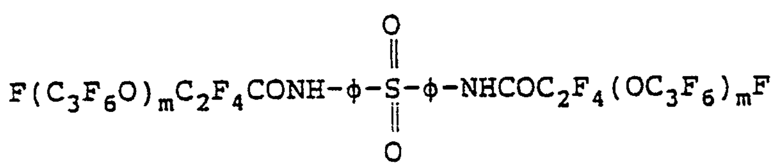

(C)

$F(C_3F_6O)_mC_2F_4CONH\text{-}\phi\text{-}O\text{-}\phi\text{-}NHCOC_2F_4(OC_3F_6)_mF$ (D)

wherein x' is CH or N, $\phi$ is o-, m- or p-phenylene, (preferably p-phenylene) and m is an integer of 3 to 30.

In the metal thin film-type magnetic tape provided with a lubricant layer containing the fluorine-containing polyamide compound of the present invention, abrasion resistance to a member such as a magnetic head or a guide pole under severe conditions of e.g., low temperature (e.g., lower than 5° C) and high humidity is (higher than 70%RH) markedly increased, and, moreover, a coefficient of friction to a running system member is decreased.

The aforementioned objects of the present invention are attained, for example, by forming a layer containing a compound, in which a perfluoropolyether chain and/or fluoropolyether chain is bonded through an amide bond to a compound having at least two amino groups in the molecule thereof, on the surface of a ferromagnetic metal thin film provided on a non-magnetic support.

It is preferred that the layer containing the fluorine-containing polyamide compound of the present invention be provided directly on the ferromagnetic metal thin film without any intervening layers, because the fluorine-containing polyamide layer is firmly bonded to the metal thin film surface to markedly improve durability particularly under high temperature and high humidity conditions.

It is found that the compounds represented by formulae (A), (B) and (C) are also effective for prevention of corrosion of ferromagnetic metal thin films and they are advantageous in use of metal thin film-type magnetic tapes under sever conditions against the metal thin film which is corrosive, i.e., high temperature and high humidity conditions.

In the present invention, any of compounds obtained by amidation of polyamines with carboxylic acid having a fluoropolyether chain can be used. Preferably the molecular weight is 1,000 to 9,000, and more preferably 1,000 to 4,500. Those having a kinematic viscosity of 50 to 400 mm/s (40° C) are excellent in running properties and provide ample abrasion resistance.

In the aforementioned formulae (A), (B), (C) and (D), m is preferably 4 to 30 and more preferably 4 to 15.

Representative examples of the fluorine-containing polyamide compound of the present invention are shown below, although the present invention is not limited thereto.

Compound 1

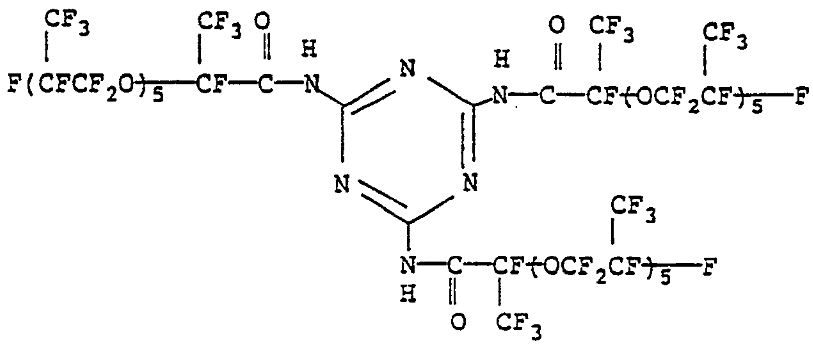

Compound 2

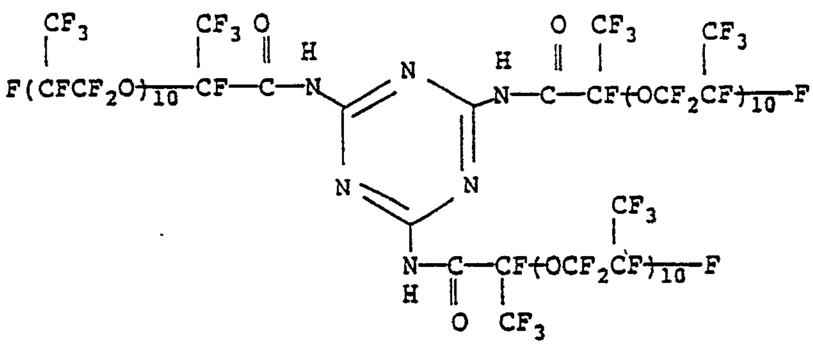

Compound 3

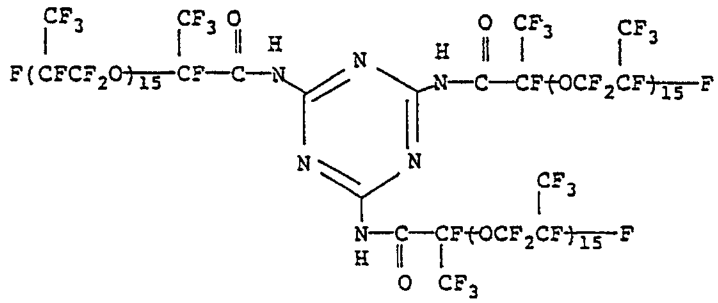

Compound 4

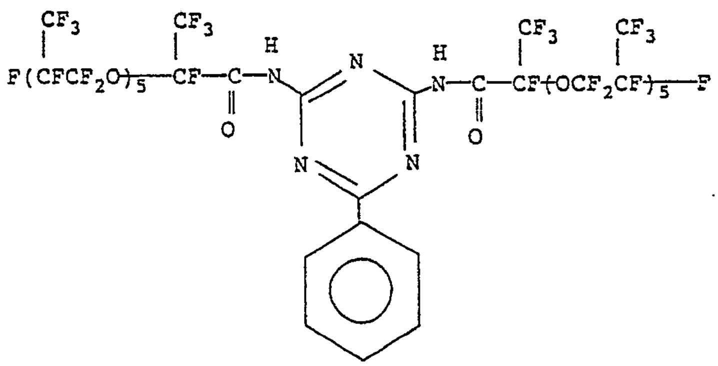

Compound 5

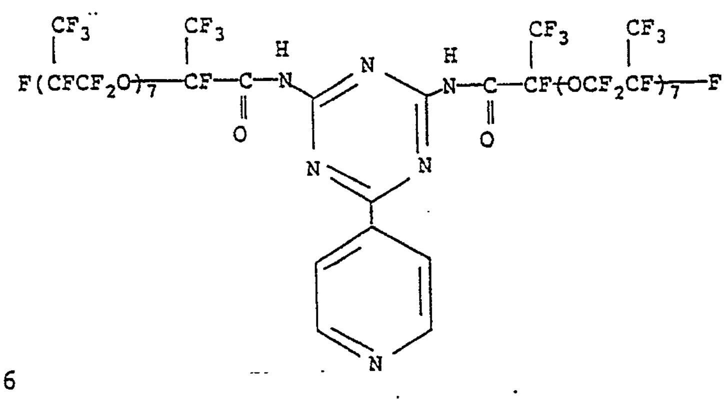

Compound 6

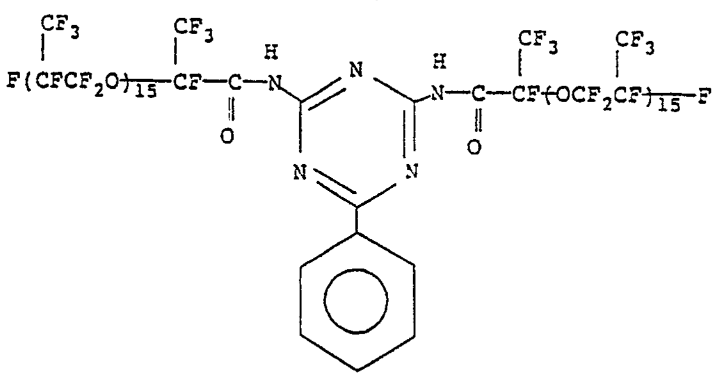

Compound 7

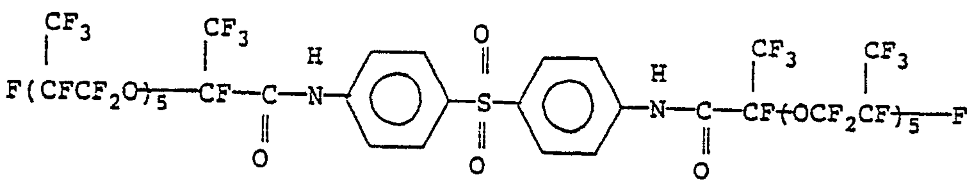

Compound 8

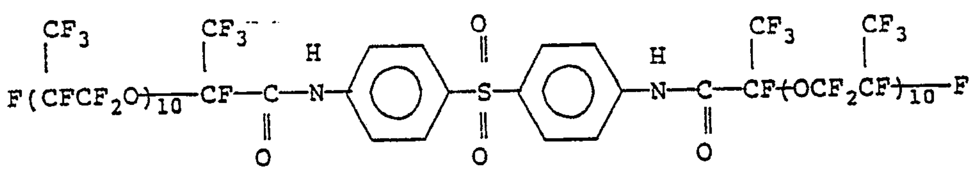

Compound 9

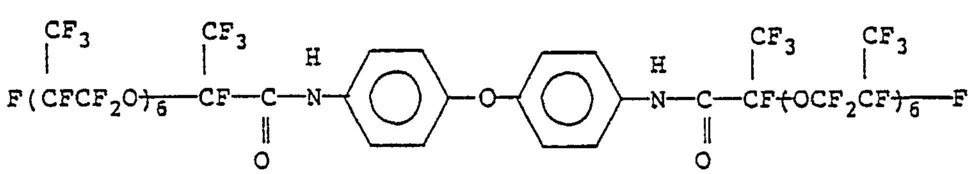

The coating amount thickness of the fluorine-containing polyamide compound of formula (I) is preferably 1.5 to 19 nm, and more preferably 2.5 to 12 nm, and most preferably 3.5 to 6 nm. If the amount is too small, the object of the present invention connot be effectively attained. If it is too much, on the other hand, a magnetic head is often stained or the resulting magnetic tape tends to stick to a head cylinder or other parts of the tape-running path of VTR under high temperature and high humidity conditions. It is assumed that this phenomenon occurs due to lack of anchor sites (adsorption sites) on the surface of the ferromagnetic metal thin film for the excess amount of the fluorine-containing polyamide compound and the unanchored compound adheres to the surface of magnetic head or other parts of tape-running path. It is also assumed to be because the thick layer is liable to absorb water vapor under high humidity conditions.

The effect that can be obtained using the fluorine-containing polyamide compound of the present invention cannot be obtained sufficiently with compounds having only a similar polyamide skeleton structure. This is due to the mutual action in the magnetic layer between the two fluoropolyether chains contributing to a reduction of coefficient of friction, the polyamide bond, and the polyamide portion as the skeleton.

The lubricating effect of the compound of the present invention is greatly exhibited in the case where at least the surface (portions within 10 nm region from the top) of the vacuum deposited ferromagnetic metal thin film layer has an oxygen content as determined by ESCA (X-ray photoelectron spectral method) or AES (Ohge eleotron spectral method) of at least 20 atom%.

This improvement in lubricating effect is believed to be attributable to the fact that the polyamide compound of the present invention exhibits a strong mutual action to the magnetic layer surface because it gives a coordinating effect by the amine compound portion as the core, and also contains a relatively large number of oxygen atoms in the molecule thereof.

In the surface protective lubricant layer to be provided on the surface of the magnetic metal thin film in the present invention, in addition to including at least one fluorine-containing polyamide compound as described above, common lubricants may also be used in combination therewith. In the case, the weight ratio of the polyamide compound to a common lubricant(s) is generally 99/1 to 50/50. The surface protective lubricant layer preferably has a thickness of 1.5 to 19 nm, more preferably 2.5 to 12 nm and most preferably 3.5 to 6 nm.

Common lubricants which can be used in combination include fluorinated polyether not having a polyamide functional group at an intermediate bond or terminal thereof, various fluoroalkyl or fluoroalkenyl derivatives, fatty acid, metallic soap, fatty acid amide, fatty acid ester, higher aliphatic alcohol, monoalkyl phosphate, dialkyl phosphate, trialkyl phosphate, paraffins, silicone oil, animal or vegetable oil, mineral oil, higher aliphatic amine, fine powder of graphite, silica, molybdenum disulfide, tungsten disulfide, etc.; fine powder of resins such as polyethylene, polypropylene, polyvinyl chloride, an ethylenevinyl chloride copolymer, and polytetrafluoroethylene; $\alpha$-olefin polymers; and unsaturated aliphatic hydrocarbons which are in liquid state at room temperature.

In the present invention, the surface protective lubricant layer can be formed by, for example, a method in which the lubricating compound materials are dissolved in an organic solvent, coated or sprayed on a substrate, and then dried; a method in which a member impregnated with the materials is brought into friction with a substrate to thereby transfer them onto the substrate; a method in which a substrate is soaked in a solution of the materials in an organic solvent to thereby make the materials adsorbed on the surface of the substrate; and a method in which a monomolecular film of the materials is formed on the surface of a substrate by the Langmuir projection method.

In order to increase the close contact of the surface protective lubricant layer to the underlying metal thin film, prior to the formation of the surface protective lubricant layer, the surface of the underlying metal thin film may be treated by a discharge such as glow, corona or plasma discharge, or modified with a surfactant such as fluorine-based fatty acid, or a coupling agent.

Each of the surface protective lubricant layer and the magnetic layer may be provided as a single layer or as multiple layers.

The ferromagnetic thin film can be formed by vapor deposition, for example, of a ferromagnetic metal such as iron, cobalt or nickel, or a ferromagnetic alloy such as Fe-Co, Fe-Ni, Co-Ni, Fe-Rh, Co-P, Co-B, Co-Y, Co-La, Co-Ce, Co-Pt, Co-Sm, Co-Mn, Co-Cr, Fe-Co-Ni, Co-Ni-P, Co-Ni-B, Co-Ni-Ag, Co-Ni-Nd, Co-Ni-Ce, Co-Ni-Zn, Co-Ni-Cu, Co-Ni-W, or Co-Ni-Fe. The metal thin film thickness is preferably 0.02 to 2 $\mu$m and particularly preferably 0.05 to 1.0 $\mu$m.

The ferromagnetic metal thin film may also contain O, N, Cr, Ga, As, Sr, Zr, Nb, Mo, Rh, Pd, Sn, Sb, Te, Pm, Re, Os, Ir, Au, Hg, Pb, Bi, etc. When oxygen and nitrogen are introduced, there is generally employed a method in which oxygen or nitrogen gas is introduced during vapor deposition of metal. In particular, in order to provide the oxygen content of the neighborhood in the surface (within 10 nm in thickness from the top) is at least 20 atom% (as determined by AES), it is important that oxygen gas is introduced at the time of vapor deposition of the ferromagnetic metal thin film, because introduction of such an amount of oxygen cannot be easily attained by, for example, oxidation treatment after vapor deposition is completed.

Although the surface structure of the magnetic layer is not particularly limited, running properties and durability are excellent when the surface has projections in the range of from 1 to 100 nm.

The thickness of the non-magnetic support for used in the present invention is preferably 4 to 50 $\mu$m. In order to improve close contact or magnetic characteristics of the ferromagnetic thin film, an underlying layer may be provided in-between the support and the ferromagnetic thin film.

As the substrate to be used in the present invention, polyethylene terephthalate, polyimide, polyamide, polyvinyl chloride, cellulose triacetate, polycarbonate, polyethylene naphthalate, polyphenylene sulfide, or like plastic bases, or Al, Ti, stainless steel, can be used.

As explained heretofore, a metal thin film-type magnetic tape with a layer containing a fluorine-containing polyamide compound of the present invention provided on the surface of the metal thin film is

excellent in temperature and humidity adaptability, running properties, and durability as compared with magnetic tapes using the conventional lubricants.

The present invention is described in greater detail with reference to the following examples, although it is not intended to be limited thereto.

Synthesis Example 1

In a 500-milliliter four-necked flask equipped with a reflux condenser, a thermometer and a stirrer, was placed 150 ml of perfluoromethylcyclohexane (molecular formula $C_7F_{14}$; molecular weight 350; boiling point 76°C; density 1.788 g/cm$^3$ at 25°C; trade name FLUTEC PP-2) in which 200 g (0.2 mol) of perfluoropolyisopropoxyperfluoropropionic acid (molecular formula $F-(CF(CF_3)CF_2O)_n-CF(CF_3)COOH$; n=5 on the average; average molecular weight 1,000 determined by a nuclear magnetic resonance analysis; density 1.89 g/cm$^3$ at 25°C; viscosity 44 mm$^2$/s at 38°C; strong acid value (57 mg KOH/g) were dissolved. Then, dry nitrogen gas was introduced in the flask and the solution was cooled and maintained at 0 to 5°C.

To the above solution, 41.5 g (0.201 mol) of N,N'-methanetetrarylbiscyclohexaneamine (molecular formula $C_{13}H_{22}N_2$; molecular weight 206.3) dissolved in 100 ml of perfluoromethylcyclohexane were gradually added dropwise with stirring over 15 minutes by the use of a dropping funnel. After completing dropwise addition, the resulting mixture was stirred for 2 hours while maintaining at 0 to 5°C.

To the above mixed solution, a dispersion of 8.5 g (0.067 mol) of finely divided 2,4,6-triamino-1,3,5-triazine (molecular formula $C_3H_6N_6$; molecular weight 126.1; melting point at least 250°C, density 1.57 g/cm$^3$ at 14°C) which was dispersed in 100 ml of a solution consisting of 25 parts of purified N,N'-dimethylformamide (molecular formula $HCON(CH_3)_2$; molecular weight 73, density 0.944 g/cm$_3$ at 25°C, boiling point 153°C) and 75 parts of perfluoromethylcyclohexane and being adjusted to 1.58 g/cm$^3$ in density at 25°C, was gradually added dropwise with stirring over 30 minutes. After addition of all the dispersion, dry nitrogen gas was introduced, and the reaction was carried out with stirring at a temperature of not more than 10°C for 48 hours.

After completing the reaction, the reaction mixture was filtered by the use of a 1 µm membrane filter for the purpose of removing the unreacted amine compound and a urea compound formed in the solution, and then the solvent having a low boiling point was distilled away at a temperature of 90°C. The product was transferred into a separating funnel, and in order to remove a small amount of the residual urea compound in the solution, the solution was washed five times with 100 ml of methyl alcohol and filtered. Thereafter, 200 ml of perfluoromethylcyclohexane were added thereto, and the resulting mixture was filtered with a 0.2 µm membrane filter, followed by distilling away the solvent and the unreacted material under reduced pressure of 665 N/m$^2$ at 120°C, whereby a light yellow liquid compound was obtained at a yield of 82%.

The strong acid value of the liquid compound as determined by the method prescribed in JIS K 2501 was 0.3 mg KOH/g, the viscosity at 40°C was 135 mm$^2$/s (JIS K 2283), and the pouring point was -15°C (JIS K 2269).

In an IR spectral analysis using Model IR 810 produced by Nippon Bunko Kogyo Co., Ltd., there was no absorption at 1780 cm$^{-1}$ ascribed to carboxylic acid, but absorptions which are characteristic for C, F and O bonds were observed at 1100 to 1330 cm$^{-1}$, and an amide absorption appeared at 1680 to 1700 cm$^{-1}$ and 3350 cm$^{-1}$.

An elemental analysis was conducted using YANACO CHN Coder MT Model 3 manufactured by Yanagimoto Seisakusho Co., Ltd. The results were as follows:

| | C | N |
|---|---|---|
| Calculated (atom %) | 22.39 | 2.75 |
| Found (atom %) | 22.5 | 2.8 |

These results show that the above product is a compound represented by the following formula (1).

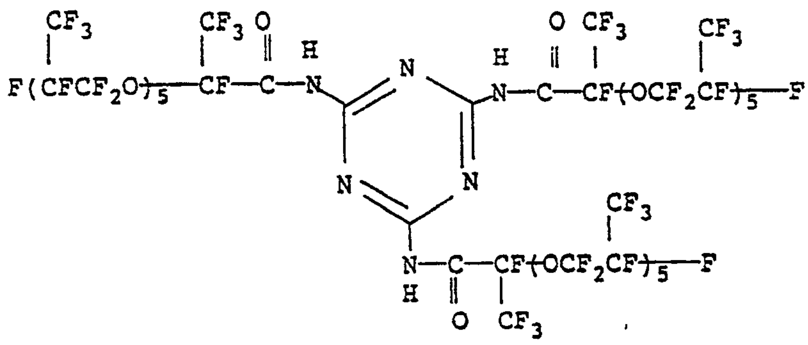

...(1)

m.w.=3054

Synthesis Example 2

In the same manner as in Synthesis Example 1, 200 g (0.108 mol) of perfluoropolyisopropoxyperfluoropropionic acid (molecular formula $F\text{-}(CF(CF_3)CF_2O)_n\text{-}CF(CF_3)COOH$; n = 10 on the average; average molecular weight 1850 determined by a nuclear magnetic resonance analysis; strong acid value 30 mg KOH/g; viscosity 90 $mm^2/s$ at 38° C) were dissolved in 150 ml of perfluoromethylcyclohexane placed in a 500-milliliter four-necked flask, which was then sealed with dry nitrogen gas, and the solution was cooled and maintained at 0 to 5° C.

To the above solution, 22.5 g (0.109 mol) of N,N'-Methanetetrarylbiscyclohexaneamine (molecular formula $C_{13}H_{22}N_2$; molecular weight 206.3) dissolved in 50 ml of perfluoromethylcyclohexane were gradually added dropwise with stirring over 15 minutes. After the dropwise addition, the resulting mixture was stirred for 2 hours while maintaining at a temperature of 0 to 5° C.

To the mixed solution, while stirring, a solution of 10.3 g (0.055 mol) of 2,4-diamino-6-phenyl-1,3,5-triazine (molecular formula $C_9H_9N_5$; molecular weight 187.2 g; melting point 224 to 228° C) dissolved in 100 ml of N,N'-dimethylformamide was gradually added dropwise over 30 minutes by the use of a separating funnel. After dropwise addition was completed, the flask was again sealed with dry nitrogen gas, and the reaction was conducted with stirring for 24 hours at a temperature of not more than 10° C.

After completing the reaction, a urea compound formed in the solution was filtered out by the use of a 1 µm membrane filter, and the low boiling solvent was distilled away at 90° C. The product was transferred into a separating funnel and then filtered and washed three times with 100 ml of N,N'-dimethylformamide for the purpose of removing the unreacted amine compound. Furthermore, for the purpose of removing a small amount of the residual urea compound, the product was filtered and washed five times with 100 ml of methyl alcohol and, thereafter, 200 ml of perfluoromethylcyclohexane was added. The resulting solution was filtered by the use of a 0.2 µm membrane filter, and the solvent and the unreacted product were distilled away at 134 to 137° C under reduced pressure of 133 $N/m^2$ to thereby obtain a light brown liquid compound at a yield of 83%.

The strong acid value of the liquid compound as determined by the method prescribed in JIS K 2501 in the same manner as in Synthesis Example 1 was 0.5 mg KOH/g, the viscosity (JIS K 2283) was 190 $mm^2/s$, and the pouring point (JIS K 2269) was -15° C.

In an IR spectral analysis, the absorption of carboxylic acid at 1780 $cm^{-1}$ disappeared, absorptions which are characteristic for C, F and O bonds were observed at 1100 to 1330 $cm^{-1}$, and absorptions of amide at 1680 to 1700 $cm^{-1}$ and 3350 $cm^{-1}$ and vibration absorptioins of carbon-hydrogen at 2850 $cm^{-1}$ and 2950 $cm^{-1}$ appeared.

An elemental analysis was conducted using YANACO CHN Coder Model MT-3 manufactured by Yanagimoto Seisakujo Co., Ltd. The results were as follows:

| | C | N |
|---|---|---|
| Calculated (atom %) | 23.69 | 1.84 |
| Found (atom %) | 24.0 | 1.9 |

The above results show that the above product is a compound having the following formula (2).

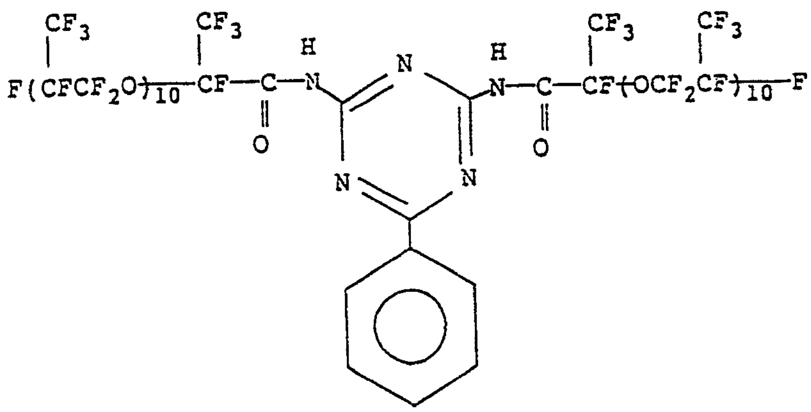

...(2)

m.w.=3799

Synthesis Example 3

In the same manner as in Synthesis Example 1, 200 g (0.2 mol) of perfluoropolyisopropoxyperfluoropropionic acid (molecular formula $F-(CF(CF_3)CF_2O)_n-CF(CF_3)COOH$; n =.5 on the average; average molecular weight 1000 determined by a nuclear magnetic resonance analysis; viscosity 44 $mm^2/s$ at 38° C; strong acid value 57 mg KOH/g) were dissolved in 150 ml of perfluoromethylcyclohexane placed in a 500-milliliter four-necked flask, which was purged and sealed with dry nitrogen gas, and the solution was cooled and maintained at 0 to 5° C.

To the above solution, 41.5 g (0.201 mol) of N,N'-methanetetrarylbiscyclohexaneamine (molecular formula $C_{13}H_{22}N_2$; molecular weight 206.3) which was dissolved in 100 ml of perfluoromethylcyclohexane, were gradually added dropwise with stirring over 15 minutes by the use of a separating funnel. After completing the dropwise addition, stirring was continued for 2 hours while maintaining the temperature at 0 to 5° C.

To the mixed solution, while stirring, a solution of 25.2 g (0.101 mol) of 4,4'-diaminodiphenylsulfone (molecular formula $C_{12}H_{12}N_2SO_2$; molecular weight 248.3; melting point 176° C) dissolved in 100 ml of N,N'-dimethylformamide was gradually added dropwise over 30 minutes by the use of a separating funnel. After completing dropwise addition, dry nitrogen gas was introduced, and the reaction was conducted with stirring for 24 hours at a temperature of not more than 10° C.

After completing the reaction, an urea compound formed in the solution was filtered out by the use of a 1 μm membrane filter, and the low boiling solvent was distilled away at 90° C. The product was transferred into a separating funnel, and for the purpose of removing the unreacted amine compound, the product was filtered and washed three times with 100 ml of N,N'-dimethylformamide. Furthermore, for the purpose of removing a small residual amount of the urea compound, the product was filtered and washed five times with 100 ml of methyl alcohol. Then, 200 ml of perfluoromethylcyclohexane were added, and the resulting solution was filtered with a 0.2 μm membrane filter. The solvent and the unreacted compound were distilled away under reduced pressure of 665 $N/m^2$ at 120° C to thereby obtain a light yellow liquid compound at a yield of 85%.

The strong acid value of the liquid compound (measured by the method of JIS K 2501) was 0.2 mg KOH/g, the viscosity (JIS K 2283) was 90 $mm^2/s$ at 40° C, and the pouring point (JIS K 2269) was -17.5° C.

In an IR spectral analysis, the absorption of carboxylic acid at 1780 $cm^{-1}$ was not observed, absorptions which are characteristic for C, F, and O bonds were observed at 1100 to 1330 $cm^{-1}$, and

absorptions of amide at 1680 to 1700 $cm^{-1}$ and 3350 $cm^{-1}$ and vibration absorptions of carbon-hydrogen at 2850 $cm^{-1}$ and 2950 $cm^{-1}$ appeared.

An elemental analysis was conducted by the use of YANACO CHN Coder Model MT-3 manufactured by Yanagimoto Seisakujo Co., Ltd. The results were as follows:

| | C | H | N |
|---|---|---|---|
| Calculated (atom%) | 26.18 | 0.45 | 1.27 |
| Found (atom%) | 26.5 | 0.5 | 1.3 |

These results show that the product is a compound having the following formula (3).

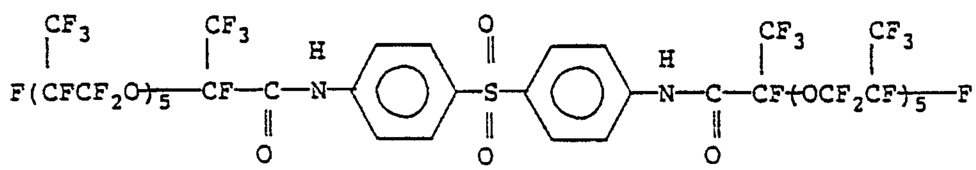

...(3)

m.w.=2200

EXAMPLE

A cobalt-nickel magnetic film (film thickness 150 nm) was formed on a 13 µm-thick polyethylene terephthalate film by oblique vapor deposition to produce an original member for a magnetic tape. The oblique vapor deposition was conducted using, as a vapor source, an electron beam vapor deposition source charged with a cobalt-nickel alloy (Co 80 wt%, Ni 20 wt%) in a vacuum of $6.7\times10^{-3}$ $N/m^3$ at the incident angle of 50°, while introducing oxygen gas. On the magnetic metal thin film of the original member for the magnetic tape, various materials as shown in Table 1 dissolved in perfluorooctane was coated and dried, and slit to obtain a magnetic tape sample (Sample Nos. 1-16 and Comparative Sample Nos. 1-4).

The above procedure was repeated, except that a 200 Å-thick carbon protective layer was formed on the magnetic metal thin film by RF-sputtering (13.5 $MH_2$) prior to the coating of the various materials as shown in Table 1, whereby other magnetic tape samples were prepared (Comparative Sample Nos. 5 and 6).

The magnetic tape samples thus obtained were measured for a coefficient of friction ($\mu$ value, measured by the method shown below) to a stainless steel rod (SUS 420J; roughness JIS 0.5S), and repeated running durability and still durability in a 8-mm type VTR under conditions (A) and (B). Further, reproduction output and weatherability of the magnetic tape samples were measured. The results are shown in Table 1.

Conditions

(A) 5°C and 70% RH, and
(B) 40°C and 70% RH.

Measurement of Coefficient of Friction

In the figure, a tape was pulled at 10 mm/s against the frictional force of the SUS pole at $T_1$ = 0.196 N (20 gw), and tension $T_2$ was measured. The coefficient of friction, $\mu$, was calculated from the following equation.

$\mu = \frac{1}{\pi} \log T_2/T_1$

Measurement of Running Durability and Still Durability

In connection with repeated running durability, a 50 m long tape was repeatedly reproduced on a 8 mm type VTR (FUJIX-8 M6 produced by Fuji Photo Film Co., Ltd.), and the number of reproductions until disturbance of an image due to instable running or stop of running due to an increase of coefficient of friction occurred was measured. Based on the number of reproductions, repeated running durability was evaluated.

In connection with still durability, a pause button was pushed at the time of image reproduction on the same type of VTR as above (except that a function limiting the still reproduction time was omitted), and the time until no image appeared was measured. Based on the time, still durability was evaluated.

Measurement of Reproduction output

Reproduction output at $7MH_z$ was evaluated, taking that of Sample No. 1 as being 0 dB.

Measurement of Weatherability

After storage at 60° C and 90%RH for 7 days, surface of each magnetic tape sample was observed and weatherability was evaluated in terms of the rate (%) of discolored area to the entire surface area.

Table 1

| Example No. | Oxygen Content of Magnetic Surface*2 (atom %) | Carbon Protective Layer | Compound of Formula (I): Formula*1 | Compound of Formula (I): m | Kinematic Viscosity (mm/s at 40°C) | Thickness of Lubricant Layer (mm) | 5°C and 70% RH: μ | 5°C and 70% RH: Still Durability | 40°C and 70% RH: μ | 40°C and 70% RH: Still Durability | Reproduction Output of 7 MHz (dB) | Weatherability (%) |
|---|---|---|---|---|---|---|---|---|---|---|---|---|
| 1 | 25 | none | B (X':CH) | 10 | 190 | 3.5 | 0.2 | more than 60 min | 0.2 | more than 60 min | 0 | 0 |
| 2 | 25 | " | A | 5 | 135 | 5 | 0.2 | more than 60 min | 0.21 | more than 60 min | 0 | 0 |
| 3 | 18 | " | A | 5 | 135 | 4 | 0.22 | more than 60 min | 0.23 | more than 60 min | 0 | 0 |
| 4 | 25 | " | A | 4 | 80 | 4 | 0.2 | more than 60 min | 0.21 | more than 60 min | 0 | 0 |
| 5 | 25 | " | A | 10 | 350 | 4 | 0.2 | more than 60 min | 0.21 | more than 60 min | 0 | 0 |
| 6 | 25 | " | C | 5 | 120 | 4 | 0.19 | more than 60 min | 0.19 | more than 60 min | 0 | 0 |

Table 1 (cont'd)

| Sample No. | Oxygen Content of Magnetic Surface*2 (atom %) | Carbon Protective Layer | Compound of Formula (I): Formula*1 | Compound of Formula (I): m | Kinematic Viscosity (mm/s at 40°C) | Thickness of Lubricant Layer (mm) | 5°C and 70% RH: μ | 5°C and 70% RH: Still Durability | 40°C and 70% RH: μ | 40°C and 70% RH: Still Durability | Reproduction Output of 7 MHz (dB) | Weatherability (%) |
|---|---|---|---|---|---|---|---|---|---|---|---|---|
| 7 | 25 | none | C | 10 | 200 | 4 | 0.19 | more than 60 min | 0.19 | more than 60 min | 0 | 0 |
| 8 | 25 | " | D | 4 | 100 | 4 | 0.18 | more than 60 min | 0.2 | more than 60 min | 0 | 20 |
| 9 | 25 | " | D | 10 | 250 | 4 | 0.19 | more than 60 min | 0.21 | more than 60 min | 0 | 25 |
| 10 | 25 | " | A | 5 | 135 | 1.3 | 0.35 | 20 min | 0.39 | 25 min | 0 | 16 |
| 11 | 25 | " | A | 5 | 135 | 22 | 0.23 | 60 min | 0.30 | 40 min | -1 | 0 |
| 12 | 14 | " | A | 5 | 135 | 3.5 | 0.26 | 60 min | 0.30 | 40 min | 0 | 0 |
| 13 | 25 | " | F | 10 | 200 | 4 | 0.23 | 45 min | 0.20 | more than 60 min | 0 | 35 |
| 14 | 25 | " | G | 10 | 220 | 4 | 0.23 | 50 min | 0.21 | more than 60 min | 0 | 46 |

Table 1 (cont'd)

| Sample No. | Oxygen Content of Magnetic Surface*2 (atom %) | Carbon Protective Layer | Compound of Formula (I) | | Kinematic Viscosity (mm/s at 40°C) | Thickness of Lubricant Layer (mm) | 5°C and 70% RH | | 40°C and 70% RH | | Reproduction Output of 7 MHz (dB) | Weatherability (%) |
|---|---|---|---|---|---|---|---|---|---|---|---|---|
| | | | Formula*1 | mn' | | | μ | Still Durability | μ | Still Durability | | |
| 15 | 25 | none | H | 10 | 210 | 4 | 0.23 | 52 min | 0.21 | more than 60 min | 0 | 43 |
| 16 | 25 | " | F | 10 | 200 | 4 | 0.22 | 15 min | 0.21 | more than 60 min | -1 | 10 |
| Comp. 1 | 25 | " | Perfluoropolyester (Krytox 143AD, produced by Du Pont) | - | 450 | 4 | 0.3 | 35 min | 0.36 | 20 min | 0 | 45 |
| " 2 | 25 | " | Perfluoropolyester (Krytox 143AZ, produced by Du Pont) | - | 16 | 4 | 0.36 | 45 min | 0.4 | 35 min | 0 | 70 |
| " 3 | 25 | " | Perfluoropolyester (Fomblin 225, produced by Monterfluos) | - | 135 | 4 | 0.34 | 30 min | 0.42 | 20 min | 0 | 60 |
| " 4 | 25 | " | E | 10 | 120 | 4 | 0.23 | 50 min | 0.38 | 45 min | 0 | 55 |
| " 5 | 25 | presence | B | 10 | 190 | 4 | 0.22 | 22 min | 0.20 | 26 min | -1 | 0 |
| " 6 | 25 | " | A | 5 | 135 | 4 | 0.20 | 18 min | 0.23 | 30 min | -1 | 0 |

[Note]

*1: Formulae A to D

Same as formulae A to D described above, wherein $C_2F_4$ (tetrafluoroethylene group) and $C_3F_6$ (hexafluoropropylene group) are iso-forms.

Formulas E to H

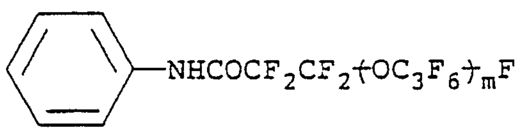

(E)

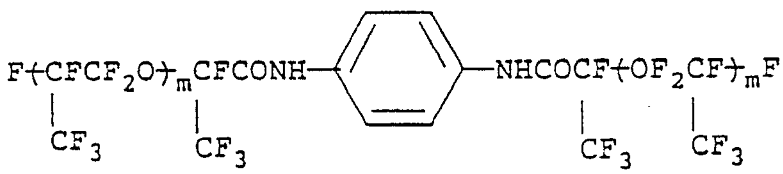

(F)

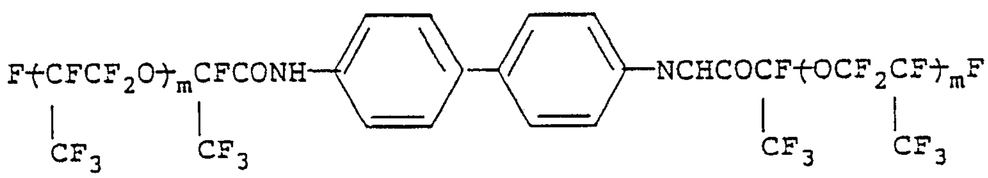

(G)

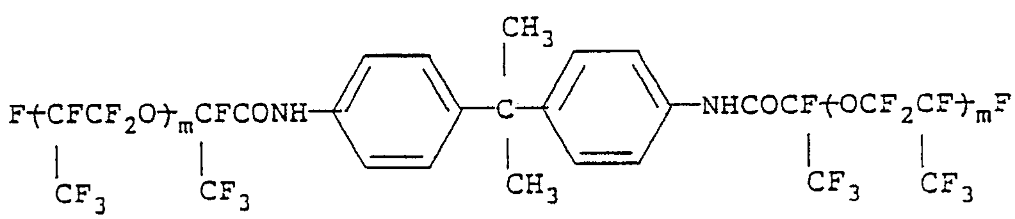

(H)

*2: Measured by the AES (Ouje electron spectral method) argon spack method. Value integrated at 100 Å from the surface in a depth direction distribution.

As seen in the results in Table 1, the samples having a ferromagnetic metal thin film layer covered with a fluorine-containing polyamide compound of formula A, B, C or D of the present invention exhibit excellent coefficient of friction and still durability under varied conditions of low temperature to high temperature. The samples using the fluorine-containing polyamide compounds of formulae A, B and C exhibits excellent weatherability as well.

While the invention has been described in detail and with reference to specific embodiments thereof, it will be apparent to one skilled in the art that various changes and modifications can be made therein without departing from the spirit and scope thereof.

## Claims

1. A metal thin film-type magnetic tape comprising a non-magnetic support and a ferromagnetic metal thin film provided on said non-magnetic support, wherein said ferromagnetic metal thin film carries thereon a fluorine-containing polyamide compound represented by formula (I):

$Q \leftarrow (NHCO\text{-}R)_n$ (I)

wherein Q is a n-valent organic radical, R is a monovalent group containing a fluorine atom and an ether bond, and n is an integer of 2 or more.

2. The metal thin film-type magnetic tape as in claim 1, wherein R is a group represented by formula (II):

$-Y-(OZ)_m-X$ (II)

wherein X is F, $CF_3$, $C_2F_5$, $C_3F_7$, $OCF_3$, $OC_2F_5$, $OC_3H_7$, or its derivative resulting from partial or full replacement of F by H or Cl; Y is $CF_2$, $C_2F_4$, $C_3F_6$, or its derivative resulting from partial or full replacement of F by H or Cl; and Z is $C_3F_6$ or its derivative resulting from partial replacement of F by H or Cl; and m is an integer of 3 to 30.

3. The metal thin film-type magnetic tape as in claim 1, wherein said fluorine-containing polyamide compound is a compound represented by formula (A), (B) or (C), or their derivatives resulting from partial replacement of F by H or Cl:

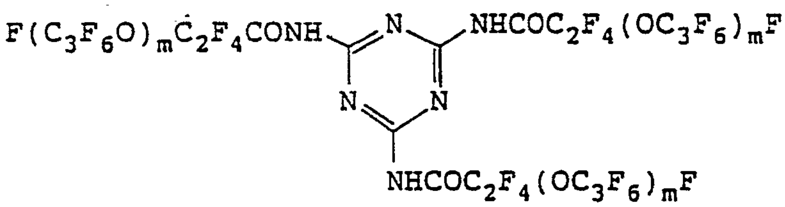

(A)

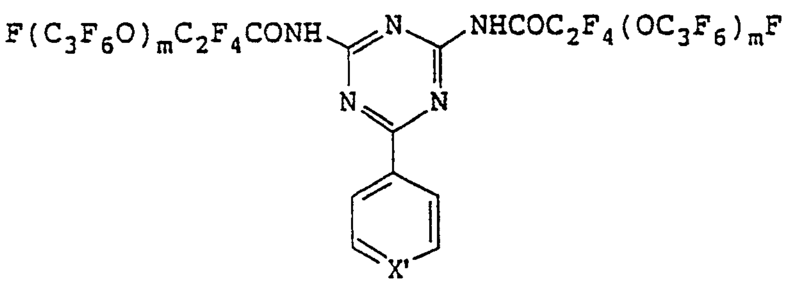

(B)

$$F(C_3F_6O)_mC_2F_4CONH-\phi-\overset{O}{\underset{O}{\overset{\|}{\underset{\|}{S}}}}-\phi-NHCOC_2F_4(OC_3F_6)_mF \qquad (C)$$

wherein X' is CH or N; $\phi$ is phenylene, and m is an integer of 3 to 30.

**4.** The metal thin film-type magnetic tape as in claim 1, wherein said ferromagnetic metal thin film has oxides formed on the surface thereof, and the molecular weight of the fluorine-containing polyamide compound is 1,000 to 9,000.

**5.** The metal thin film-type magnetic tape as in claim 1, wherein said fluorine-containing polyamide compound is present in a coating amount thickness of 1.5 to 19 nm.

**6.** The metal thin film-type magnetic tape as in claim 1, wherein said fluorine-containing polyamide compound is present in a coating amount thickness of 2.5 to 12 nm.

**7.** The metal thin film-type magnetic tape as in claim 1, wherein said ferromagnetic metal thin film comprises an oxygen content of at least 20 atom% in a surface region with 10 nm from an upper surface of said ferromagnetic metal thin film.

**8.** The metal thin film-type magnetic tape as in claim 1, wherein said ferromagnetic metal thin film has a thickness of from 0.02 to 2 $\mu$m and surface projections in the range of from 1 to 100 nm.

**9.** The metal thin film-type magnetic tape as in claim 1, wherein said fluorine-containing polyamide compound is formed by acylating a compound having at least two amino groups with a carboxylic acid compound having a fluorine-containing alkylenepolyether chain.

**10.** The metal thin film-type magnetic tape as in claim 3, wherein m is 4 to 30.

**11.** The metal thin film-type magnetic tape as in claim 1, wherein said fluorine-containing polyamide compound is directly provided on the surface of the ferromagnetic metal thin film.

FIGURE 1

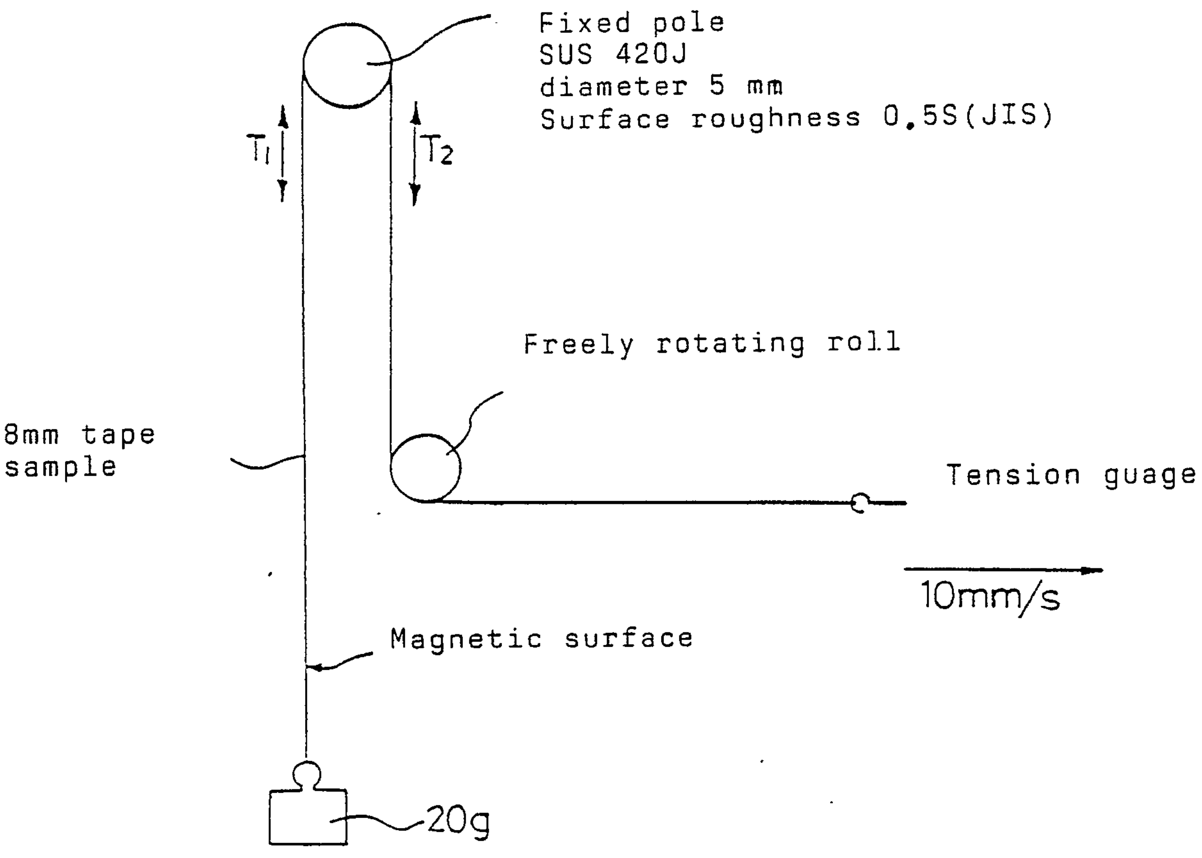
Fixed pole
SUS 420J
diameter 5 mm
Surface roughness 0.5S(JIS)
T1
T2
Freely rotating roll
8mm tape
sample
Tension guage
10mm/s
Magnetic surface
20g